# EUROPEAN PATENT APPLICATION

(11) **EP 2 731 189 A1**
(43) Date of publication of application: **14.05.2014**
(21) Application number: 12808012.4
(22) Date of filing: 03.07.2012
(51) Int. Cl.: H01M 10/06, H01M 4/14, H01M 4/62, H01M 10/08

(54) **FLOODED LEAD-ACID BATTERY**

(30) Priority: 05.07.2011 JP 2011148940
(71) Applicant: GS Yuasa International Ltd., Kyoto-shi, Kyoto 601-8520 (JP)
(72) Inventor: OKAMOTO, Naohisa, Kyoto 601-8520 (JP); TSUTSUMI, Takao, Kyoto 601-8520 (JP)
(74) Representative: Isarpatent
(86) International application number: PCT/JP2012/066949
(87) International publication number: WO 2013/005733

(57) **Abstract**

A flooded lead-acid battery includes a negative active material, a positive active material having lead dioxide as a main component, and an electrolyte solution that contains sulfuric acid and is flowable. The negative active material of the flooded lead-acid battery contains carbon, a water-soluble polymer formed of a bisphenol condensation product having a sulfonic acid group, and a cellulose ether. The flooded lead-acid battery has low turbidity of the electrolyte solution and is excellent in high rate discharge performance at low temperature, regenerative charge accepting performance, and endurance performance in a partially charged state.

## Description

### TECHNICAL FIELD

The present invention relates to a flooded lead-acid battery, and particularly to a flooded lead-acid battery which contains a large amount of carbon black in a negative active material and which has low turbidity of an electrolyte solution.

### BACKGROUND ART

There is a practice to improve energy efficiency of automobiles by using a flooded lead-acid battery in a partially charged state. In idling stop cars, for example, fuel consumptions are reduced by stopping an engine every time the car is stopped, and the engine is started with electric power from a storage battery at the time of starting the car. Therefore, the storage battery is used in a partially charged state. Since overcharge of a storage battery is avoided for improving energy efficiency, and electric power taken from the storage battery is increased, the storage battery is often placed in a partially charged state, and this tendency is not limited to idling stop cars.

When a lead-acid battery is used in a partially charged state, lead sulfate, which is hard to be reduced, is accumulated in a negative active material to reduce endurance. It is known that accumulation of lead sulfate can be suppressed by making a negative active material contain a large amount of carbon black. However, when carbon black is contained in an amount of, for example, more than 0.5 mass% with respect to 100 mass% of spongy lead of a negative active material, carbon black flows out into an electrolyte solution during operation, and is deposited on the inner wall of a container, so that visibility of a solution level is reduced. In a flooded lead-acid battery, it is necessary to compensate a loss of an electrolyte solution by adding water, and therefore reduction of visibility of a solution level is problematic. There is a practice to provide a solution level sensor, but if the sensor is contaminated with carbon black, it becomes difficult to detect a solution level. It is therefore necessary to add a large amount of carbon black to a flooded lead-acid battery while turbidity of an electrolyte solution is made low.

Related prior art is as follows. Patent Document 1 (JP-A-09-73895) proposes that a water-soluble substance such as CMC (carboxymethyl cellulose) or PEO (polyethylene oxide) is added to an active material paste of a flooded lead-acid battery, a grid of a plate is filled with the active material paste, the active material paste is dried, and then the plate is immersed in water to remove CMC or the like. The document describes that pore spaces generated by eluting CMC or the like improve the utilization factor of an active material.

Patent Document 2 (JP-A-2003-338285) discloses that a bisphenol condensation product and carbon black are contained in a negative active material of a valve regulated lead-acid battery. The document describes that the bisphenol condensation product finely divides the negative active material, so that charge acceptance is improved via a synergistic action with carbon black. However, it has been found from experiments by the inventors that when a bisphenol condensation product and a large amount of carbon black are contained in a negative active material of a flooded lead-acid battery, high rate discharge performance at low temperature or the like is improved, but turbidity of an electrolyte solution due to carbon black cannot be suppressed.

### PRIOR ART DOCUMENTS

### PATENT DOCUMENTS

Patent Document 1: JP-A-09-73895
Patent Document 2: JP-A-2003-338285

### SUMMARY OF THE INVENTION

### PROBLEMS TO BE SOLVED BY THE INVENTION

A basic object of the present invention is to provide a flooded lead-acid battery which has low turbidity of an electrolyte solution and which is excellent in high rate discharge performance at low temperature, regenerative charge accepting performance, and endurance performance in a partially charged state.

### MEANS FOR SOLVING THE PROBLEMS

The present invention provides a flooded lead-acid battery including a negative active material, a positive active material having lead dioxide as a main component, and an electrolyte solution that contains sulfuric acid and is flowable. The negative active material contains spongy lead, carbon, a water-soluble polymer formed of a bisphenol condensation product having a sulfonic acid group, and a cellulose ether. In this specification, the content of carbon or the like in the negative active material is expressed with respect to 100 mass% of the spongy lead in the negative active material. When the negative active material contains lead sulfate or the like, the amount of spongy lead is determined by calculating the amount of lead sulfate or the like in terms of spongy lead. The content of an additive in the negative active material is, for example, a content at a stage where formation has already been performed. Formation means a process in which basic lead sulfate and lead oxide are oxidized in an aqueous sulfuric acid solution to form lead dioxide of the positive active material, and are reduced in an aqueous sulfuric acid solution to form metallic lead of the negative active material.

Carbon is, for example, carbon black, but may be any carbon that is fine and has a large specific surface area. The carbon content is preferably 0.5 mass% or more, and is preferably 2.5 mass% or less. The carbon content is especially preferably 0.5 mass% to 2.5 mass% (both inclusive).

The negative active material further contains a water-soluble polymer formed of a bisphenol condensation product having a sulfonic acid group, and a cellulose ether. Hereinafter, the bisphenol condensation product having a sulfonic acid group is referred to simply as a bisphenol condensation product. The bisphenol condensation product is represented by, for example, the chemical formula:

(-(OH)(RSO₃H)Ph-X-Ph(OH)(R'SO₃H)CH₂-)ₙ,

where R and R' are each an appropriate alkyl group such as a methylene group and X is a SO₂ group, an alkyl group or the like, but two phenyl groups may be bonded directly without including X. Hydrogen of the SO₃H group may be replaced by an appropriate cation, particularly an alkali metal ion such as a Na⁺ ion, in the negative active material. Further, the RSO₃H group, the R'SO₃H group and the CH₂ group are at an ortho position with respect to the OH group of the phenyl group (Ph), and monomers of the condensation product are connected to one another via the CH₂ group. Many of commercially available bisphenol condensation products have two sulfonic acid groups per monomer, but the number of sulfonic acid groups per monomer is arbitrary, and may be, for example, 1 to 4. The bisphenol condensation product is bisphenol S when X is a SO₂ group, and bisphenol A when X is -C(CH₃)₂-. Bisphenol S is used in the example, but comparable results are obtained even when bisphenol A is used. The molecular weight of the bisphenol condensation product is arbitrary, and may be, for example, about 4000 to 250000, and influences of the molecular weight are small. The bisphenol condensation product is similar to lignin sulfonic acid in that it is a water-soluble polymer including an aromatic ring and a sulfonic acid group, but the bisphenol condensation product is different from lignin sulfonic acid in that it does not have a carboxyl group, an ether group and an alcoholic hydroxyl group, and is a polymer which is not a network polymer but a linear polymer.

The type of the cellulose ether is arbitrary, but is preferably one that can be changed between a water-soluble form and a water-insoluble form. Preferably, for example a carboxy alkyl cellulose such as carboxymethyl cellulose is added as a water-soluble salt such as a Na salt, reacted with H⁺ ions in an electrolyte solution to change into a water-insoluble acid type, and allowed to exist in the negative active material.

Preferably the negative active material contains 0.1 mass% or more of the bisphenol condensation product with respect to 100 mass% of spongy lead, and preferably the negative active material contains 0.9 mass% or less of the bisphenol condensation product with respect to 100 mass% of spongy lead. Especially preferably, the negative active material contains 0.1 mass% to 0.9 mass% (both inclusive) of the bisphenol condensation product with respect to 100 mass% of spongy lead. Most preferably, the negative active material contains 0.3 mass% to 0.7 mass% (both inclusive) of the bisphenol condensation product with respect to 100 mass% of spongy lead.

Preferably the negative active material contains 0.01 mass% or more of the cellulose ether with respect to 100 mass% of spongy lead, and preferably the negative active material contains 0.3 mass% or less of the cellulose ether with respect to 100 mass% of spongy lead. Most preferably, the negative active material contains 0.01 mass% to 0.3 mass% (both inclusive) of the cellulose ether with respect to 100 mass% of spongy lead. The cellulose ether is preferably a carboxy alkyl cellulose. Most preferably, the negative active material contains 0.05 mass% to 0.1 mass% (both inclusive) of the carboxy alkyl cellulose with respect to 100 mass% of spongy lead.

Preferably, the negative active material further contains lignin slufonic acid, and the content thereof is, for example, 0.2 mass% to 0.5 mass% (both inclusive) with respect to 100 mass% of spongy lead.

Outflow of carbon black or the like to the electrolyte solution can be suppressed by making the negative active material contain a cellulose ether. By making the negative active material contain a water-soluble polymer such as a bisphenol condensation product in addition to the cellulose ether, the concentration of carbon in an electrolyte solution after formation can be kept at 3 mass ppm or less, so that visibility of the solution level is enhanced. When a cellulose ether and a bisphenol condensation product are contained, endurance in a partially charged state can be significantly improved, and high rate discharge performance at low temperature, regenerative charge accepting performance and the like can be made comparable to or better than those in conventional examples in which the amount of carbon black or the like is small and neither of a cellulose ether and a bisphenol condensation product is contained. When a bisphenol condensation product is replaced by lignin sulfonic acid, the concentration of carbon black or the like in an electrolyte solution can be made 3 mass ppm or less depending on conditions.

The effect of the bisphenol condensation product is significant at a concentration of 0.1 mass% to 0.9 mass% (both inclusive), and particularly significant at a concentration of 0.3 mass% to 0.7 mass% (both inclusive), and the effect of the cellulose ether is significant at a concentration of 0.01 mass% to 0.3 mass% (both inclusive), and particularly significant at a concentration of 0.05 mass% to 0.1 mass% (both inclusive). Therefore, preferably the negative active material contains 0.5 mass% to 2.5 mass% (both inclusive) of carbon such as carbon black, 0.3 mass% to 0.7 mass% (both inclusive) of the bisphenol condensation product and 0.05 mass% to 0.1 mass% (both inclusive) of the cellulose ether with respect to 100 mass% of spongy lead.

### MODE FOR CARRYING OUT THE INVENTION

A best mode for carrying out the present invention will be shown below. When the present invention is carried out, the example can be appropriately changed in accordance with the common knowledge of those skilled in the art and disclosures of prior art.

### EXAMPLE

As a cellulose ether, a Na salt of carboxymethyl cellulose (CMC) was dissolved in water. Any other carboxy alkyl cellulose may be used in place of carboxymethyl cellulose, and a cellulose ether other than those mentioned may be used as long as it is soluble in neutral or alkaline water. The effect of the cellulose ether lies in preventing outflow of carbon black by existing in pores of a negative active material as a fibrous material insoluble in an electrolyte solution.

To an aqueous solution of CMC was added ketjen black as carbon black, and the mixture was kneaded. Then, a condensation product of bisphenol S (molecular weight: about 100000) as a dispersant, 0.6 mass% of barium sulfate with respect to 100 mass% of spongy lead and 0.1 mass% of acrylic fibers (reinforcing agent) with respect to 100 mass% of spongy lead were added, and the mixture was kneaded. In this specification, the amount of an additive is expressed as the content with respect to 100 mass% of spongy lead as described above. When acetylene black is used in place of ketjen black, comparable results are obtained, and different carbon black such as oil furnace black may be used. When a bisphenol A condensation product was used in place of the bisphenol S condensation product, almost comparable results were obtained. Further, when the molecular weight of the bisphenol S condensation product was changed to 10000, the same results were obtained. Barium sulfate and acrylic fibers do not have to be added, and other synthetic resin fibers may be added in place of acrylic fibers. A paste obtained in the manner described above is called a carbon paste.

A leady oxide prepared by a ball-milling method, lignin sulfonic acid (hereinafter, referred to simply as "lignin", and lignin to be kneaded with a leady oxide is referred to as an "anti-shrink agent"), water and sulfuric acid were added to the carbon paste, and the mixture was kneaded to form a negative active material paste. The type of the leady oxide and the method for production thereof are arbitrary. In the example, a carbon paste obtained by kneading carbon black, a bisphenol condensation product and CMC beforehand was mixed with a leady oxide, but they may be kneaded with a leady oxide separately, and in this case, it is preferable that the contents of the bisphenol condensation product and CMC are made higher.

As a conventional example, a carbon paste having a ketjen black content of 0.3 mass% and containing neither of CMC and a bisphenol condensation product was prepared, and a negative active material paste was prepared with water and an acid in the same manner as in the example. As comparative examples, negative active material pastes having a ketjen black content of more than 0.3 mass%, and
- containing neither of CMC and a bisphenol condensation product; or
- containing CMC but not containing a bisphenol condensation product, in a carbon paste, were prepared. Further, lignin was examined as a substitute material for bisphenol, and a negative active material paste containing CMC and containing lignin in place of a bisphenol condensation product in a carbon paste was prepared. Different carbon black may be contained in place of ketjen black, and different carbon such as graphite, active carbon or carbon fibers may be contained in place of carbon black. A bisphenol condensation product and lignin in a carbon paste are referred to as a carbon dispersant, and lignin kneaded in a carbon paste together with a leady oxide, or kneaded in a carbon paste after a leady oxide is kneaded is referred to as an anti-shrink agent. As shown in Table 1 shown later, lignin is contained for the purpose of dispersing carbon and preventing shrinkage of a lead active material, and for achieving these different purposes effectively, it is necessary to put lignin in the paste in two stages.

To 100 kg of a leady oxide, 0.1 mass% of acrylic fibers were added as a reinforcing agent, and water and an acid were added to prepare a positive active material paste.

A Pb-Ca-Sn alloy-based and expand-type negative electrode grid was filled with the negative active material paste, and the paste was dried to form a negative electrode plate. The negative electrode plate has a width of 137 mm, a height of 115 mm and a thickness of 1.3 mm, and the composition of the negative electrode grid and the method for production thereof are arbitrary. A Pb-Ca-Sn alloy-based and expand-type positive electrode grid was filled with the positive active material paste, and the paste was dried to form a positive electrode plate. The positive electrode plate has a width of 137 mm, a height of 115 mm and a thickness of 1.6 mm, and the composition of the positive electrode grid and the method for production thereof are arbitrary.

The negative electrode plate and the positive electrode plate were cured at 35°C, the negative electrode plate was enveloped with a polyethylene separator, and two parallel positive electrode plates and one negative electrode plate were set in a container for evaluation of turbidity of an electrolyte solution and initial performance. Further, eight parallel negative electrode plates and seven parallel positive electrode plates were set in the container for evaluation of endurance performance. Dilute sulfuric acid (specific gravity: 1.285 at 25°C) as an electrolyte solution was poured into the container, and then subjected to container formation to form a flooded lead-acid battery. The composition and performance of the flooded lead-acid battery are shown in Table 1, and the flooded lead-acid batteries are comparable to one another apart from the negative active material.

Ketjen black was dispersed in an electrolyte solution in a concentration of 1.5 mass ppm to 300 mass ppm to prepare a standard sample. The degree of turbidity of the electrolyte solution 30 minutes after formation was compared with the degree of turbidity of the standard sample. The content of ketjen black in the electrolyte solution in each flooded lead-acid battery was determined. When the content of carbon black in the electrolyte solution is 3 mass ppm, visual recognition of a solution level is not hindered, but when the content of carbon black is more than 6 mass ppm, visual recognition of a solution level is difficult.

As high rate discharge performance at low temperature, the time (in seconds) until the terminal voltage of the storage battery was decreased to 1.0 V with a discharge current of 37.5 A was measured in an environment with a room temperature of -15°C. As regenerative charge accepting performance, a storage battery in a 90% charged state was placed in an environment with a room temperature of 25°C, and charged for 10 seconds by a charge current of maximum 12.5 A at a constant voltage of 2.4 V, and an amount of electricity (in A-seconds) received by the storage battery during this period was measured. For evaluating endurance performance in a partially charged state, a cycle including discharge at 50 A for 60 seconds and charge for 60 seconds by a charge current of maximum 50 A at a constant voltage of 2.33 V was repeated, and the number of cycles until the terminal voltage of the storage battery was less than 1.0 V at the time of discharge was measured. This number of cycles represents life performance in a partially charged state. Measurement results (average values each for three lead-acid batteries) are shown in Table 1, where the amount of the additive to the negative active material is expressed in mass% with respect to 100% of spongy lead in the negative active material, and the outflow of carbon black to the electrolyte solution is expressed in mass ppm with respect to 100% of the total amount of the electrolyte solution. Samples A0 to A13 are storage batteries that do not contain a bisphenol condensation product, and samples B1 to B20 are storage batteries that contain a bisphenol condensation product.

**[Table 1]**

| No. | Additive | | | | | | | | Performance | | | | | |
|---|---|---|---|---|---|---|---|---|---|---|---|---|---|---|
| | Conducting agent | | Carbon dispersant | | Cellulose ether | | Anti-shrink agent | | Electrolyte solution | | Initial performance | | | Endurance (cycles) |
| | Type | Amount | Type | Amount | Type | Amount | Type | Amount | Amount of carbon (ppm) | Solution turbidity assessment | High rate at low temperature (s) | Regenerative acceptance (A-s) | Assessment* | |
| A0 | Carbon black | 0.30% | - | - | - | - | Lignin | 0.20% | 2 ppm | ○ | 220 | 104 | ○ | 10,000 |
| A1 | Carbon black | 0.50% | - | - | - | - | Lignin | 0.50% | 5 ppm | × | - | - | - | - |
| A2 | Carbon black | 1.00% | - | - | - | - | Lignin | 0.50% | 12 ppm | × | - | - | - | - |
| A3 | Carbon black | 1.50% | - | - | - | - | Lignin | 0.50% | 60 ppm | × | - | - | - | - |
| A4 | Carbon black | 2.00% | - | - | - | - | Lignin | 0.50% | 300 ppm | × | - | - | - | - |
| A5 | Carbon black | 1.50% | - | - | CMC | 0.10% | Lignin | 0.50% | 12 ppm | × | 210 | 100 | ○ | 14,000 |
| A6 | Carbon black | 1.50% | - | - | CMC | 0.20% | Lignin | 0.50% | 10 ppm | × | 220 | 94 | × | 14,000 |
| A7 | Carbon black | 1.50% | Lignin | 0.10% | CMC | 0.20% | Lignin | 0.50% | 6 ppm | × | 220 | 80 | × | - |
| A8 | Carbon black | 1.50% | Lignin | 0.30% | CMC | 0.20% | Lignin | 0.50% | 6 ppm | × | 230 | 80 | × | - |
| A9 | Carbon black | 1.50% | Lignin | 0.50% | CMC | 0.20% | Lignin | 0.50% | 3 ppm | ○ | 240 | 80 | × | - |
| A10 | Carbon black | 1.50% | Lignin | 0.50% | CMC | 0.10% | Lignin | 0.50% | 3 ppm | ○ | 240 | 96 | × | 14,000 |
| A11 | Carbon black | 1.50% | Lignin | 0.50% | CMC | 0.10% | Lignin | 0.20% | 3 ppm | ○ | 210 | 102 | ○ | 14,000 |
| A12 | Carbon black | 1.50% | Lignin | 0.50% | CMC | 0.10% | - | - | 3 ppm | ○ | 180 | 102 | × | - |
| A13 | Carbon black | 1.50% | - | - | CMC | 0.10% | Lignin | 0.20% | 30 ppm | × | 170 | 108 | × | 13,000 |
| B1 | Carbon black | 1.50% | Bisphenol condensation product | 0.10% | CMC | 0.10% | Lignin | 0.20% | 2 ppm | ○ | 200 | 120 | ○ | 20,000 |
| B2 | Carbon black | 1.50% | Bisphenol condensation product | 0.30% | CMC | 0.10% | Lignin | 0.20% | 2 ppm | ○ | 220 | 120 | ○ | 21,000 |
| B3 | Carbon black | 1.50% | Bisphenol condensation product | 0.50% | CMC | 0.10% | Lignin | 0.20% | 2 ppm | ○ | 240 | 120 | ○ | 26,000 |
| B4 | Carbon black | 1.50% | Bisphenol condensation product | 0.70% | CMC | 0.10% | Lignin | 0.20% | 2 ppm | ○ | 240 | 120 | ○ | 25,000 |
| B5 | Carbon black | 1.50% | Bisphenol condensation product | 0.90% | CMC | 0.10% | Lignin | 0.20% | 3 ppm | ○ | 240 | 115 | ○ | 25,000 |
| B6 | Carbon black | 1.50% | Bisphenol condensation product | 0.50% | CMC | 0.010% | Lignin | 0.20% | 3 ppm | ○ | 240 | 108 | ○ | 24,000 |
| B7 | Carbon black | 1.50% | Bisphenol condensation product | 0.50% | CMC | 0.050% | Lignin | 0.20% | 3 ppm | ○ | 240 | 120 | ○ | 26,000 |
| B8 | Carbon black | 1.50% | Bisphenol condensation product | 0.50% | CMC | 0.20% | Lignin | 0.20% | 1 ppm | ○ | 240 | 104 | ○ | 24,000 |
| B9 | Carbon black | 1.50% | Bisphenol condensation product | 0.50% | CMC | 0.30% | Lignin | 0.20% | 1 ppm | ○ | 240 | 100 | ○ | 24,000 |
| B13 | Carbon black | 1.50% | Bisphenol condensation product | 0.50% | CMC | 0.005% | Lignin | 0.20% | 6 ppm | × | 230 | 120 | ○ | - |
| B14 | Carbon black | 1.50% | Bisphenol condensation product | 0.50% | CMC | 0.40% | Lignin | 0.20% | 2 ppm | ○ | 230 | 95 | × | - |
| B15 | Carbon black | 1.50% | Bisphenol condensation product | 0.050% | CMC | 0.10% | Lignin | 0.20% | 6 ppm | × | 180 | 120 | × | - |
| B16 | Carbon black | 1.50% | Bisphenol condensation product | 1.00% | CMC | 0.10% | Lignin | 0.20% | 6 ppm | × | 240 | 115 | ○ | 15,000 |
| B17 | Carbon black | 2.00% | Bisphenol condensation product | 0.50% | CMC | 0.10% | Lignin | 0.20% | 3 ppm | ○ | 240 | 105 | ○ | 24,000 |
| B18 | Carbon black | 2.50% | Bisphenol condensation product | 0.50% | CMC | 0.10% | Lignin | 0.20% | 3 ppm | ○ | 240 | 105 | ○ | 22,000 |
| B19 | Carbon black | 3.00% | Bisphenol condensation product | 0.50% | CMC | 0.10% | Lignin | 0.20% | 6 ppm | × | 240 | 100 | ○ | 12,000 |
| B20 | Carbon black | 1.50% | Bisphenol condensation product | 0.50% | - | - | Lignin | 0.20% | 300 ppm | × | 200 | 108 | ○ | 12,000 |

| | | | | | | | | | | | | | | |
|---|---|---|---|---|---|---|---|---|---|---|---|---|---|---|
| *Acceptability criteria were determined to be 200 s or more for the high rate at low temperature, and 100 A-s or more for regenerative acceptance. | | | | | | | | | | | | | | |

As is evident from Table 1, turbidity of the electrolyte solution rapidly increases when neither of CMC and a carbon dispersant is added and the content of carbon black is increased. When CMC is added, turbidity is sharply reduced, but visibility is not sufficient. When CMC and a bisphenol condensation product are used in combination, the degree of turbidity of the electrolyte solution can be reduced to 3 mass ppm or less, initial performance can be made comparable to or better than that of the conventional example in which the carbon black content is 0.3 mass%, and endurance performance in a partially charged state can be significantly improved.

When the bisphenol condensation product is replaced by lignin, turbidity of the electrolyte solution can be reduced, but an effect as high as that of the bisphenol condensation product cannot be achieved. Further, regenerative charge accepting performance is deteriorated as compared to the conventional example, and endurance performance is not improved as compared with endurance performance achieved with the bisphenol condensation product (see the sample containing 1.5 mass% of carbon black, 0.5 mass% of lignin and 0.1 mass% of CMC).

Influences of the content of CMC are shown for a system containing 1.5 mass% of carbon black and 0.5 mass% of a bisphenol condensation product. Turbidity occurs in the electrolyte solution when the content of CMC is 0.005 mass%, the degree of turbidity can be reduced to 3 mass ppm or less when the content of CMC is 0.01 mass% or more, and regenerative charge accepting performance can be further enhanced when the content of CMC is 0.05 mass% or more. The performance is best when the content of CMC is around 0.1 mass%, regenerative charge accepting performance is deteriorated when the content of CMC is 0.3 mass%, and regenerative charge accepting performance is further deteriorated when the content of CMC is 0.4 mass%. Therefore, the content of CMC is preferably 0.01 mass% to 0.3 mass% (both inclusive), especially preferably 0.05 mass% to 0.1 mass% (both inclusive).

Influences of the content of the bisphenol condensation product are shown for a system containing 1.5 mass% of carbon black and 0.1 mass% of CMC. When the content of the bisphenol condensation product is 0.05 mass%, turbidity occurs in the electrolyte solution and high rate discharge performance at low temperature is deteriorated as compared to the conventional example. When the content of the bisphenol condensation product is 0.1 mass%, the degree of turbidity of the electrolyte solution is 2 mass ppm, and as compared to the conventional example, high rate discharge performance at low temperature is slightly poor, but regenerative charge accepting performance is high and endurance performance is significantly improved as compared to the conventional example. The performance is best when the bisphenol condensation product is contained in an amount of 0.3 mass% to 0.7 mass% (both inclusive), the degree of turbidity of the electrolyte solution increases to 3 mass ppm and regenerative charge accepting performance is slightly deteriorated when the content of the bisphenol condensation product is 0.9 mass%. Therefore, the content of the bisphenol condensation product is preferably 0.1 mass% to 0.9 mass% (both inclusive), especially preferably 0.3 mass% to 0.7 mass% (both inclusive).

Because regenerative charge accepting performance and endurance performance are not sufficient when the content of carbon black is less than 0.5 mass%, the content of carbon black is preferably 0.5 mass% to 2.5 mass% (both inclusive) for achieving initial performance comparable to or better than that in the conventional example and excellent endurance performance while reducing the degree of turbidity of the electrolyte solution to 3 ppm or less. In the sample containing 1.5 mass% of carbon black and 0.5 mass% of a bisphenol condensation product but not containing CMC, the degree of turbidity of the electrolyte solution was 300 mass ppm, and therefore turbidity of the electrolyte solution was not sufficiently suppressed without using a cellulose ether such as CMC.

Thus, according to the example,
- turbidity of the electrolyte solution can be made low to enhance visibility of a solution level;
- high rate discharge performance at low temperature and regenerative charge accepting performance can be kept comparable to or better than those in the conventional example; and
- endurance performance under partially charged conditions can be improved.

For confirming the effect of a cellulose ether, a flooded lead-acid battery was prepared by way of trial with carboxymethyl cellulose replaced by a similar water-soluble polymer. A Na salt of carboxymethyl cellulose (CMC), styrene butadiene rubber (SBR), polyvinyl alcohol (PVA) or hydroxyethyl cellulose was dissolved or dispersed in water. To this solution or dispersion was added ketjen black as an example of carbon black, the mixture was kneaded for 5 minutes, a bisphenol condensation product (molecular weight: 100000), and 0.6 mass% of barium sulfate and 0.1 mass% of acrylic fibers with respect to 100 mass% of spongy lead were then added, and the mixture was kneaded for 10 minutes to form a carbon paste. A leady oxide was added to the carbon paste, the mixture was kneaded for 5 minutes, 0.2 mass% of lignin sulfonic acid with respect to 100 mass% of spongy lead and water were added, sulfuric acid was added dropwise, and the mixture was then kneaded for further 10 minutes to form a negative active material paste.

For negative active material pastes formed as described above, examination was conducted on whether or not the paste can form a paste lump and whether or not a negative electrode grid can be filled with the paste. For those with which a paste can be formed and a negative electrode grid can be filled, a flooded lead-acid battery was prepared by way of trial as in the case of each sample in Table 1, an electrolyte solution was taken from a storage battery about 30 minutes after formation, and the concentration of carbon was estimated from the degree of solution turbidity. The results are shown in Table 2. With styrene butadiene rubber, neither paste formation nor filling could be performed, and with polyvinyl alcohol, paste formation could be performed but filling could not be performed. Hydroxyethyl cellulose led to poor visibility of a solution level with the degree of solution turbidity being 60 mass ppm.

**[Table 2]**

| Formulations and Results of Binder Selection Experiment | | | | | | | | | | | | |
|---|---|---|---|---|---|---|---|---|---|---|---|---|
| No. | Formulations | | | | | | | | Results | | | |
| | Conducting agent | | Carbon dispersant | | Binder | | Anti-shrink agent | | Paste properties | | Electrolyte solution | |
| | Type | Amount | Type | Amount | Type | Amount | Type | Amount | Paste formation | Filling characteristics | Amount of carbon (ppm) | Solution turbidity assessment |
| C1 | Carbon black | 1.5% | Bisphenol condensation product | 0.5% | SBR | 0.1% | Lignin | 0.2% | × | × | - | - |
| C2 | Carbon black | 1.5% | Bisphenol condensation product | 0.5% | PVA | 0.1% | Lignin | 0.2% | ○ | × | - | - |
| C3 | Carbon black | 1.5% | Bisphenol condensation product | 0.5% | Hydroxyethyl cellulose | 0.1% | Lignin | 0.2% | ○ | ○ | 60 ppm | × |
| C4 | Carbon black | 1.5% | Bisphenol condensation product | 0.5% | CMC | 0.1% | Lignin | 0.2% | ○ | ○ | 2 ppm | ○ |

## Claims

1. A flooded lead-acid battery comprising:
a negative active material;
a positive active material having lead dioxide as a main component; and
an electrolyte solution that contains sulfuric acid and is flowable,
wherein the negative active material contains spongy lead, carbon, a water-soluble polymer formed of a bisphenol condensation product having a sulfonic acid group, and a cellulose ether.

2. The flooded lead-acid battery according to claim 1, wherein the carbon is carbon black.

3. The flooded lead-acid battery according to claim 1 or 2, wherein the negative active material contains 0.5 mass% or more of the carbon with respect to 100 mass% of the spongy lead.

4. The flooded lead-acid battery according to claim 1 or 2, wherein the negative active material contains 2.5 mass% or less of the carbon with respect to 100 mass% of the spongy lead.

5. The flooded lead-acid battery according to claim 1 or 2, wherein the negative active material contains 0.5 mass% to 2.5 mass% (both inclusive) of the carbon with respect to 100 mass% of the spongy lead.

6. The flooded lead-acid battery according to any one of claims 1 to 5, wherein the negative active material contains 0.1 mass% or more of the water-soluble polymer formed of the bisphenol condensation product with respect to 100 mass% of the spongy lead.

7. The flooded lead-acid battery according to any one of claims 1 to 5, wherein the negative active material contains 0.9 mass% or less of the water-soluble polymer formed of the bisphenol condensation product with respect to 100 mass% of the spongy lead.

8. The flooded lead-acid battery according to any one of claims 1 to 5, wherein the negative active material contains 0.1 mass% to 0.9 mass% (both inclusive) of the water-soluble polymer formed of the bisphenol condensation product with respect to 100 mass% of the spongy lead.

9. The flooded lead-acid battery according to any one of claims 1 to 8, wherein the negative active material contains 0.01 mass% or more of the cellulose ether with respect to 100 mass% of the spongy lead.

10. The flooded lead-acid battery according to any one of claims 1 to 8, wherein the negative active material contains 0.3 mass% or less of the cellulose ether with respect to 100 mass% of the spongy lead.

11. The flooded lead-acid battery according to any one of claims 1 to 8, wherein the negative active material contains 0.01 mass% to 0.3 mass% (both inclusive) of the cellulose ether with respect to 100 mass% of the spongy lead.

12. The flooded lead-acid battery according to any one of claims 9 to 11, wherein the cellulose ether is a carboxy alkyl cellulose.

13. The flooded lead-acid battery according to any one of claims 1 to 12, wherein the negative active material further contains lignin sulfonic acid.

14. The flooded lead-acid battery according to any one of claims 2 to 13, wherein the electrolyte solution has a carbon black concentration of 3 mass ppm or less at a stage after formation.
